# EUROPEAN PATENT APPLICATION

(11) **EP 3 176 686 A1**
(43) Date of publication of application: **07.06.2017**
(21) Application number: 16201291.8
(22) Date of filing: 30.11.2016
(51) Int. Cl.: G06F 3/0488, G06F 3/0482, G06F 1/16

(54) **METHOD AND DEVICE FOR OPERATING USER INTERFACE OBJECT**

(30) Priority: 01.12.2015 CN 201510862378
(71) Applicant: Xiaomi Inc., Beijing 100085 (CN)
(72) Inventor: CHEN, Zhijun, Haidian District, Beijing 100085 (CN); HOU, Wendi, Haidian District, Beijing 100085 (CN); LONG, Fei, Haidian District, Beijing 100085 (CN)
(74) Representative: Grunert, Marcus

(57) **Abstract**

The present disclosure relates to a method and device for operating an object, which are related to user interface interaction technologies. The method for operating an object includes: receiving (201, 301) an edge touch signal; selecting (202) a target operation object on a user interface according to the edge touch signal, wherein the edge touch signal is a signal triggered by an edge touch sensor, and the user interface includes at least one operation object; and performing (203) a preset operation on the target operation object. By using the method in the present disclosure, when a user uses a mobile terminal, he/she can operate the terminal with one hand, and thus user experience can be improved.

## Description

### TECHNICAL FIELD

The present disclosure generally relates to User Interface (UI) interaction technologies, and more particularly, to a method and device for operating an object.

### BACKGROUND

A plurality of operation objects are usually displayed on a user interface. The operation objects may be application programs, folders, files, menu items, grids and the like.

When a user needs to operate one of operation objects on a user interface, the user needs to tap or click the operation object so as to select the operation object among the plurality of operation objects. A terminal performs a preset operation corresponding to the operation object. For example, the terminal can open the object, start the object or perform other operations relating to the object.

### SUMMARY

In order to address the problem of inconvenience in one-hand operation due to relatively large screen of current mobile terminals, the present invention provides a method and device for operation of an object. The technical solutions of the present disclosure are as follows.

According to a first aspect of embodiments of the present invention, there is provided a method for operating an object, including:
receiving an edge touch signal;
selecting a target operation object on a user interface according to the edge touch signal, wherein the edge touch signal is a signal triggered by an edge touch sensor, and the user interface includes at least one operation object; and
performing a preset operation on the target operation object.

Optionally, the selecting of the target operation object on the user interface according to the edge touch signal, includes:
according to an arrangement of the operation object on the user interface and a signal feature of the edge touch signal, determining a display region on the user interface indicated by the edge touch signal; and
selecting an operation object located in the indicated display region as the target operation object.

Optionally, the edge touch signal is an edge knock signal, and the signal feature includes a knock position and the number of knocks;
the determining of the display region on the user interface indicated by the edge touch signal according to the arrangement of the operation object on the user interface and the signal feature of the edge touch signal, includes:
determining a row or a column on the user interface corresponding to the knock position, wherein the at least one operation object on the user interface is arranged in at least one row and column, and each row or column includes a plurality of display regions arranged in order; and
determining a display region corresponding to the number of knocks in the row or column corresponding to the knock position.

Optionally, the determining of the display region corresponding to the number of knocks in the row or column corresponding to the knock position, includes:
in the row or column corresponding to the knock position, determining a K-th display region as the display region corresponding to the number of knocks;
wherein K=mod (M, N), M is the number of knocks, and N is the number of the display regions in the row or column corresponding to the knock position.

Optionally, the edge touch signal is a continuous touch signal, and the signal feature includes a touch position and a touch duration;
the determining of the display region on the user interface indicated by the edge touch signal according to the arrangement of the operation object on the user interface and the signal feature of the edge touch signal, includes:
determining a row or column corresponding to the touch position on the user interface, wherein the at least one operation object on the user interface is arranged in at least one row and column, and each row or column includes a plurality of display regions arranged in order; and
in the row or column corresponding to the touch position, determining an *n-th* display region as the display region corresponding to the touch duration, wherein the touch duration is in direct proportion to *n.*

Optionally, the method further includes:
obtaining a holding gesture of a user by the edge touch sensor;
determining whether the holding gesture is a preset holding gesture; and
if the holding gesture is the preset holding gesture, performing the selection of the target operation object on the user interface according to the edge touch signal.

Optionally, the method further includes:
distinguishingly displaying the target operation object and other operation objects;
wherein the distinguishing displaying includes at least one of displaying the target operation object and other operation objects using different background colors, displaying the target operation object and other operation objects using different border effects, and displaying the target operation object and other operation objects using different text effects.

According to another aspect of embodiments of the present invention, there is provided a device for operating an object, including:
a first receiving module configured to receive an edge touch signal;
a selection module configured to select a target operation object on a user interface according to the edge touch signal, wherein the edge touch signal is a signal triggered by an edge touch sensor, and the user interface includes at least one operation object; and
a first execution module configured to perform a preset operation on the target operation object.

Optionally, the selection module includes:
a region determination sub-module configured to, according to an arrangement of the operation object on the user interface and a signal feature of the edge touch signal, determine a display region on the user interface indicated by the edge touch signal; and
an object selection sub-module configured to select an operation object located in the indicated display region as the target operation object.

Optionally, the edge touch signal is an edge knock signal, and the signal feature includes a knock position and the number of knocks; and
wherein the region determination sub-module includes:
a first determination sub-module configured to determine a row or a column on the user interface corresponding to the knock position, wherein the at least one operation object on the user interface is arranged in at least one row and column, and each row or column includes a plurality of display regions arranged in order; and
a second determination sub-module configured to determine a display region corresponding to the number of knocks in the row or column corresponding to the knock position.

Optionally, the second determination sub-module is configured to, in the row or column corresponding to the knock position, determine a K-th display region as the display region corresponding to the number of knocks;
wherein K=mod (M, N), M is the number of knocks, and N is the number of the display regions in the row or column corresponding to the knock position.

Optionally, the edge touch signal is a continuous touch signal, and the signal feature includes a touch position and a touch duration; and
wherein the region determination sub-module includes:
a third determination sub-module configured to determine a row or column corresponding to the touch position on the user interface, wherein the at least one operation object on the user interface is arranged in at least one row and column, and each row or column includes a plurality of display regions arranged in order; and
a fourth determination sub-module configured to, in the row or column corresponding to the touch position, determine an *n-th* display region as the display region corresponding to the touch duration, wherein the touch duration is in direct proportion to *n.*

Optionally, the device further includes:
an obtaining module configured to obtain a holding gesture of a user by the edge touch sensor;
a determination module configured to determine whether the holding gesture is a preset holding gesture; and
a second execution module configured to, if the holding gesture is the preset holding gesture, perform the selection of the target operation object on the user interface according to the edge touch signal.

Optionally, the device further includes:
a distinguishing display module configured to distinguishingly display the target operation object and other operation objects;
wherein the distinguishing displaying includes at least one of displaying the target operation object and other operation objects using different background colors, displaying the target operation object and other operation objects using different border effects, and displaying the target operation object and other operation objects using different text effects.

According to a third aspect of embodiments of the present invention, there is provided a device for operating an object, including:
a processor; and
a memory for storing instructions executable by the processor;
wherein the processor is configured to:
receive a first edge touch signal;
select a target operation object on a user interface according to the first edge touch signal, wherein the first edge touch signal is a signal triggered by an edge touch sensor, and the user interface includes at least one operation object; and
perform a preset operation on the target operation object. Optionally, at least the first receiving module, the selection module and/or the first execution module of the device according to the second aspect of the present invention are components or parts of or integrated into the processor.

According to a fourth aspect of embodiments of the present disclosure, there is provided a computer program which, when being executed on a processor of a mobile terminal, performs any one of the above methods.

Technical solutions provided by embodiments of the present invention can have the following advantageous effects.

An edge touch signal is received, a target operation object on a user interface is selected according to the edge touch signal, and a preset operation is performed on the target operation object. In this way, the technical solutions in the present disclosure can solve the problem that it is not convenient for a user to operate a mobile terminal with one hand since the terminal usually has a relatively large screen. By using the technical solutions in the present disclosure, when a user uses a mobile terminal, he/she can operate the terminal with one hand, and thus user experience can be improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a schematic diagram showing an implementation environment for implementing a method for operating an object according to at least a part of exemplary embodiments.
Fig. 1B is a schematic diagram showing an implementation environment for implementing a method for operating an object according to at least a part of exemplary embodiments.
Fig. 1C is a schematic diagram showing an implementation environment for implementing a method for operating an object according to at least a part of exemplary embodiments.
Fig. 2A is a flowchart showing a method for operating an object according to an exemplary embodiment.
Fig. 2B is a schematic diagram showing an implementation of a method for operating an object according to an exemplary embodiment.
Fig. 3A is a flowchart showing a method for operating an object according to an exemplary embodiment.
Fig. 3B is a schematic diagram showing an implementation of a method for operating an object according to an exemplary embodiment.
Fig. 3C is a flowchart showing a method for operating an object according to an exemplary embodiment.
Fig. 3D is a schematic diagram showing an implementation of a method for operating an object according to an exemplary embodiment.
Fig. 3E is a flowchart showing a method for operating an object according to an exemplary embodiment.
Fig. 4 is a block diagram showing a device for operating an object according to an exemplary embodiment.
Fig. 5 is a block diagram showing a device for operating an object according to an exemplary embodiment.
Fig. 6 is a block diagram showing a device for operating an object according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

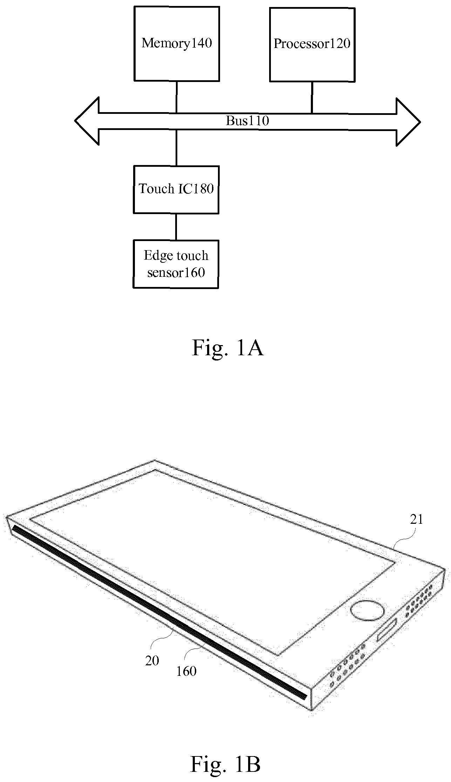

Fig. 1A is a schematic diagram showing a hardware structure of a mobile terminal according to an exemplary embodiment of the present disclosure. The mobile terminal can be an electronic device such as a mobile phone, a tablet, an e-book reader and the like. The mobile terminal can include a bus 110, a processor 120, a memory 140, an edge touch sensor 160 and a touch Integrated Circuit (IC) 180.

The memory 140 is connected with the processor 120 via the bus 110, the edge touch sensor 160 is connected with the touch IC 180, and the touch IC 180 is connected with the processor 120 via the bus 110.

The memory 140 stores instructions executable by the processor 120 and preset unlock passwords.

The edge touch sensor 160 receives edge touch signals.

The edge touch sensor 160 sends the received edge touch signals to the touch IC 180.

The touch IC 180 converts the edge touch signals into signals recognizable by the processor and sends the converted signals to the processor 120, or the touch IC 180 detects the received signals, and sends the detection results to the processor 120.

The edge touch sensor 160 can be disposed on the periphery of at least one of an upper frame, a lower frame, a left frame and a right frame of the terminal, or disposed at an area between a touch screen of the terminal and at least one of the frames of the terminal.

Optionally, the mobile terminal can have one edge touch sensor 160.

Optionally, a plurality of edge touch sensors 160 can be evenly distributed on the periphery of at least one of the upper frame, the lower frame, the left frame and the right frame of the terminal in a discrete manner, or disposed at an area between a touch screen of the terminal and at least one of the frames of the terminal in a discrete manner.

Optionally, the edge touch sensor 160 can, in a stripe form, be distributed on the periphery of at least one of the upper frame, the lower frame, the left frame and the right frame of the terminal, or disposed at an area between a touch screen of the terminal and at least one of the frames of the terminal. For example, a stripe-shaped edge touch sensor 160 can cover the area between the touch screen and one frame.

An example that the edge touch sensor 160 is disposed on the periphery of at least one of the upper frame, the lower frame, the left frame and the right frame of the terminal in a stripe form can be found in Fig. 1B. As shown in Fig. 1B, the stripe-shaped edge touch sensor 160 is disposed on the periphery of the left frame 20 and the periphery of the right frame 21.

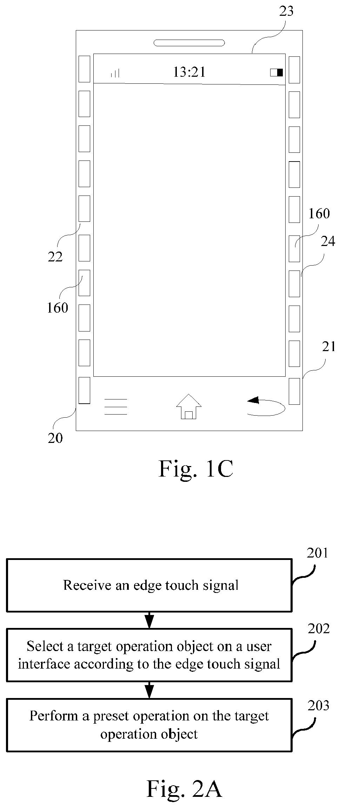

An example that the edge touch sensors 160 are evenly distributed at an area between the touch screen of the terminal and at least one frame of the terminal in a discrete manner can be found in Fig. 1C. As shown in Fig. 1C, the edge touch sensors 160 are evenly distributed at an area 22 between the touch screen 23 of the terminal and the left frame 20 and an area 24 between the touch screen 23 of the terminal and the right frame 21 in a discrete manner.

Fig. 2A is a flowchart showing a method for operating an object according to an exemplary embodiment of the present disclosure. The method for operating an object can be performed by the mobile terminal described in connection with Fig. 1A. As shown in Fig. 2A, the method for operating an object can include the following steps.

In step 201, an edge touch signal is received.

In step 202, a target operation object on a user interface is selected according to the edge touch signal.

The edge touch signal is a signal triggered by an edge touch sensor, and the user interface includes at least one operation object. Optionally, the at least one operation object can be any one of an application programs, a folder, a file, a menu item, a grid and the like.

Optionally, the at least one operation object on the user interface can be arranged in rows and columns. Each row or column on the user interface can include a plurality of display regions arranged in order. The number of the operation objects can be smaller than the number of the display regions, for example, one operation object can correspond to one display region.

Optionally, different touch positions sensed by the edge touch sensors can correspond to different rows or columns on the user interface. The relationship between the edge touch sensors and the rows or columns of the display regions on the user interface is related to actual physical structure of the mobile terminal.

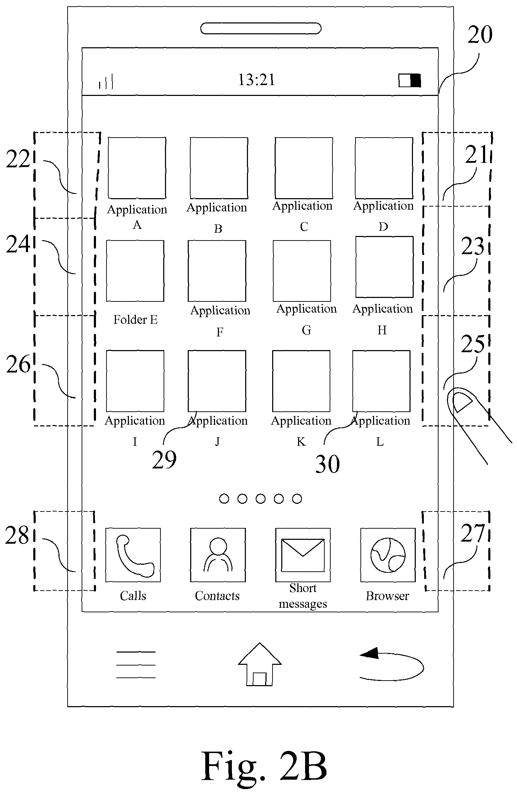

As shown in Fig. 2B, sixteen operation objects on a user interface 20 are arranged in rows and columns. Specifically, the operation objects are arranged in four rows, each of which includes four display regions, i.e., four columns. Each display region has an operation object therein. Areas 21 and 22 correspond to four application programs in the four display regions in the first row, areas 23 and 24 correspond to four application programs in the four display regions in the second row, areas 25 and 26 correspond to four application programs in the four display regions in the third row, and areas 27 and 28 correspond to four application programs in the four display regions in the fourth row.

In step 203, a preset operation is performed on the target operation object.

In view of the above, in the method for operating an object provided by embodiments of the present disclosure, an edge touch signal is received, a target operation object on a user interface is selected according to the edge touch signal, and a preset operation is performed on the target operation object. In this way, the technical solutions in the present disclosure can solve the problem that it is not convenient for a user to operate a mobile terminal with one hand since the terminal usually has a relatively large screen. By using the technical solutions in the present disclosure, when a user uses a mobile terminal, he/she can operate the terminal with one hand, and thus user experience can be improved.

In an exemplary embodiment, before selecting of the target operation object on the user interface according to the edge touch signal, the mobile terminal can further determine whether a gesture (hereinafter "holding gesture") for a user to hold the mobile terminal is a preset holding gesture. The mobile terminal can obtain the holding gesture of the user and the edge touch signal by an edge touch sensor.

Optionally, after receiving an edge touch signal, the mobile terminal obtains a holding gesture of the user by an edge touch sensor, and determines whether the holding gesture of the user is a preset holding gesture. If the holding gesture of the user is the preset holding gesture, the mobile terminal selects the target operation object on the user interface according to the received edge touch signal. After completion of response to an edge touch signal for once, the mobile terminal obtains an edge touch signal and the holding gesture of the user again, and then determines whether the holding gesture is the preset holding gesture again so as to determine whether to respond to the edge touch signal. If the holding gesture is not the preset holding gesture, the mobile terminal can neglect the received edge touch signal. In other words, the mobile terminal does not respond to the received edge touch signal under such condition.

Optionally, for the receiving of the holding gesture of the user and edge touch signals, after the mobile terminal obtains the holding gesture of the user by the edge touch sensor, the mobile terminal determines whether the holding gesture of the user is a preset holding gesture. If the holding gesture of the user is the preset gesture, the mobile terminal does not obtain the holding gesture of the user in a subsequent period of time until the target operation object on the user interface is selected according to the edge touch signal. If the holding gesture of the user is not the preset gesture, the mobile terminal obtains the holding gesture of the user again. The duration of the above-mentioned subsequent period of time can be measured in second, for example, five seconds, or ten seconds.

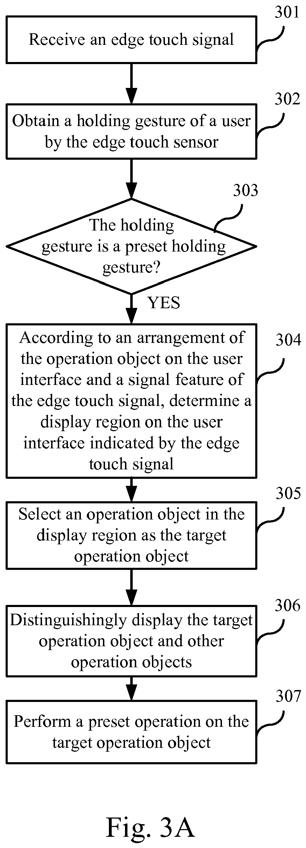

Fig. 3A is flowchart showing a method for operating an object according to an exemplary embodiment of the present disclosure. The method for operating an object can be performed by the mobile terminal described in connection with Fig. 1A. As shown in Fig. 3A, which shows one of the examples as described above, can include the following steps.

In step 301, an edge touch signal is received.

Specifically, the mobile terminal receives an edge touch signal.

For example, when a user performs an operation at an edge of the mobile terminal, an edge touch signal can be generated.

It should be noted that the present embodiment does not impose limitations on sequence of step 301, for example, step 301 can be performed after step 303.

In step 302, a holding gesture of the user is obtained by an edge touch sensor.

For example, the mobile terminal can obtain the holding gesture of the user by an edge touch sensor.

Specifically, the holding gesture is a state for the user to use the mobile terminal. When the edge touch sensors on two opposite sides of the terminal sense at least four touch positions at the edges of the terminal, and at least one touch position is sensed at each side, the terminal can be considered as being held by the user.

In step 303, whether the holding gesture is a preset holding gesture is determined.

Optionally, the preset holding gesture can be a one-handed holding gesture which is preset by the user. For example, after entering a setting interface of the mobile terminal, the user can hold the mobile terminal according to his/her operation habits, and the memory of the mobile terminal can store edge touch positions and the number of the edge touch positions when the user is using the preset holding gesture.

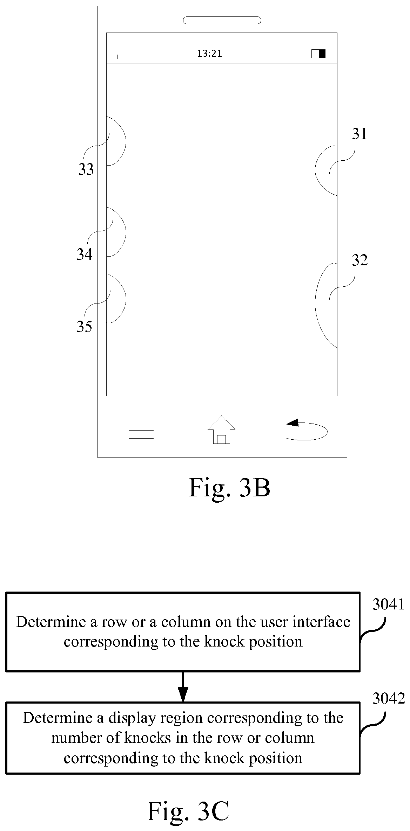

For example, the user can define the preset holding gesture as a right-handed gesture. As shown in Fig. 3B, the edge touch positions in the areas 31 to 35 constitute the edge touch positions corresponding to the preset holding gesture.

If the holding gesture of the user is the preset holding gesture, the mobile terminal performs the selection of the target operation object on the user interface according to the edge touch signal.

Specifically, if the determination result is that the holding gesture is the preset holding gesture, step 304 is performed. If the determination result is that the holding gesture is not the preset holding gesture, the mobile terminal can neglect the received edge touch signal. In other words, the mobile terminal does not respond to the edge touch signal under such condition.

In step 304, according to an arrangement of the operation object on the user interface and a signal feature of the edge touch signal, a display region on the user interface indicated by the edge touch signal is determined.

Optionally, the edge touch signal is an edge knock signal, and the signal feature of the edge touch signal includes a knock position and the number of knocks.

This step can be realized by the following two steps, as shown in Fig. 3C:
In step 3041, a row or a column on the user interface corresponding to the knock position is determined.

In step 3042, a display region corresponding to the number of knocks in the row or column corresponding to the knock position is determined.

The step can include: in the row or column corresponding to the knock position, determining a K-th display region as the display region corresponding to the number of knocks; wherein K=mod (M, N), M is the number of knocks, and N is the number of the display regions in the row or column corresponding to the knock position.

The number K is the remainder after dividing the number of knocks by the number of the display regions in the row or column corresponding to the knock position.

Optionally, the originating display region can be a preset display region. For example, the display region which is closest to the knock position can be set as the originating display region, or one display region can be appointed as the originating display region.

For example, in Fig. 2B, if a user knocks the area 25 for three times, the originating operation object is the display region which is closest to the knock position, i.e., the display region 30 corresponding to the operation object "Application L". After receiving the edge touch signal, the mobile terminal determines that the knock position indicated by the edge touch signal is the area 25, the number of the knocks is three, and the knock position corresponds to the third row on the user interface, K=mod (3, 4) =3, i.e., in the third row corresponding to the knock position, the display region corresponding to the number of knocks is the third display region 29 from the right in the third row.

In step 305, the operation object in the indicated display region is selected as the target operation object.

One operation object can correspond to one display region, and the operation in the display region indicated by the edge touch signal can be selected as the target operation object.

In step 306, the target operation object and other operation objects are distinguishingly displayed.

Optionally, the distinguishing displaying includes at least one of displaying the target operation object and other operation objects using different background colors, displaying the target operation object and other operation objects using different border effects, and displaying the target operation object and other operation objects using different text effects.

In order to avoid inadvertent operations, the target operation object needs to be clearly shown. For example, the target operation objects and other operation objects can be displayed distinguishingly.

Optionally, the background color of the target operation object can be changed, for example, making the background color of the target operation object deeper.

Or, the frame of the target operation object can have special effects, for example, the frame of the target operation object can be blurred.

Or, the text effect of the target operation object can be changed, for example, the color of the name under the target operation object can be changed.

Or, the target operation object can be distinguished from other operation objects by at least one of changing the background color of the target operation object, generating special frame effects of the target operation object, and changing the text effect of the target operation object.

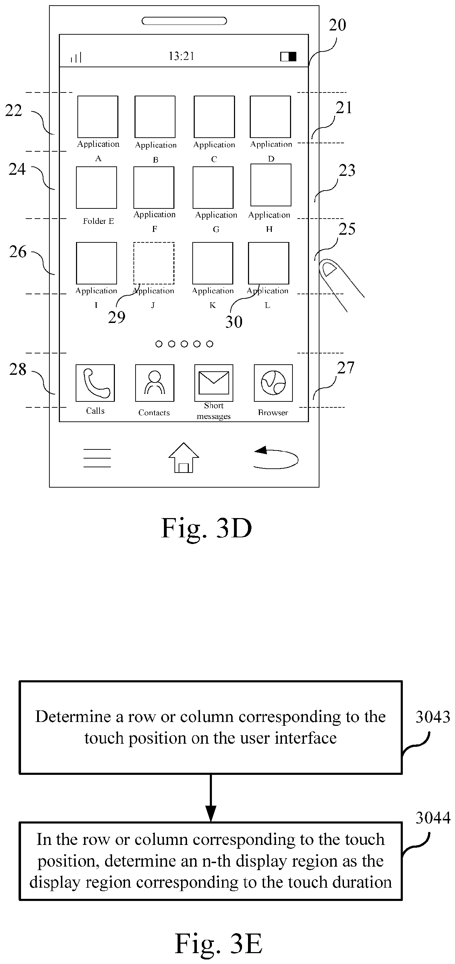

For example, if the "Application J" in the display region 29 in Fig. 2B is selected as the target operation object, the frame of the "Application J" can become dotted line, as shown in Fig. 3D.

Optionally, if the prominently displayed target operation object is the operation object as desired by the user, step 307 is performed. If the prominently displayed target operation object is not the operation object as desired by the user, edge touch operations are performed again, i.e., selecting the target operation object again.

In step 307, a preset operation is performed on the target operation object.

Optionally, if the target operation object is in a selected state for a predetermined period of time, the preset operation is automatically performed on the target operation object. For example, after the target operation object is in a selected state for one second, the preset operation is automatically performed.

Optionally, the preset operation can be opening, moving, deleting and the like.

For example, when the target operation object is an application program, the preset operation can be opening the application program.

When the target operation object is a folder, the preset operation can be opening the folder.

When the target operation object is a file, the preset operation can be deleting the file.

In view of the above, in the method for operating an object provided by embodiments of the present disclosure, an edge touch signal is received, a target operation object on a user interface is selected according to the edge touch signal, and a preset operation is performed on the target operation object. In this way, the technical solutions in the present disclosure can solve the problem that it is not convenient for a user to operate a mobile terminal with one hand since the terminal usually has a relatively large screen. By using the technical solutions in the present disclosure, when a user uses a mobile terminal, he/she can operate the terminal with one hand, and thus user experience can be improved.

In addition, by obtaining a knock position indicated by the edge touch signal and the number of knocks in embodiments of the present disclosure, a user can operate an operation object on a user interface with only one hand, and thus operations become easier.

In addition, by distinguishingly displaying the target operation object and other operation objects in embodiments of the present disclosure, when a user wrongly selects an operation object, inadvertent operations can be avoided. In this way, the target operation object is more prominently shown, and inadvertent operations can be avoided. Thus, user experience can be improved.

In the exemplary embodiment described in connection with Fig. 3A, when the edge touch signal is a continuous touch signal, the signal feature of the edge touch signal can include a touch position and a touch duration. Steps 3041 and 3042 can be replaced with steps 3043 and 3044. In other words, step 304 can also be realized by the following steps, as shown in Fig. 3E.

In step 3043, a row or column corresponding to the touch position on the user interface is determined.

In step 3044, in the row or column corresponding to the touch position, an *n-th* display region is determined as the display region corresponding to the touch duration.

The touch duration can be in direct proportion to *n.* The number *n* is the number of display regions in the row or column corresponding to the continuous touch signal.

The mobile terminal can obtain the touch position indicated by the edge touch signal, and determine the row or column corresponding to the display region according to the touch position.

Optionally, the touch duration of the continuous touch signal can be in direct proportion to *n.* The proportional coefficient can be set by the user. For example, if the proportional coefficient between the touch duration of the continuous touch signal and *n* is 1, when the duration of the continuous touch signal is 1s (one second), the first display region can be determined as the display region corresponding to the touch duration; when the duration of the continuous touch signal is 2s (two seconds), the second display region can be determined as the display region corresponding to the touch duration; when the duration of the continuous touch signal is 3s (three seconds), the third display region can be determined as the display region corresponding to the touch duration; ... and so on.

Optionally, the originating display region can be a preset display region. For example, the display region which is closest to the knock position indicated by the edge touch signal can be set as the originating display region, or one display region can be appointed as the originating display region.

For example, in Fig. 2B, if a user continuously touches the area 25 for 3s (three seconds), the originating display region is the display region which is closest to the touch position. The mobile terminal receives the edge touch signal, and determines that the touch position indicated by the edge touch signal is the area 25, the continuous touch duration is three seconds, and the continuous signal corresponds to the third row on the user interface. If it is assumed that the proportional coefficient between the touch duration and *n* is 1, the third display region 29 from the right in the third row can be determined as the display region corresponding to the touch duration.

In addition, by continuously touching the edge touch sensor and obtaining the touch position indicated by the edge touch signal and the continuous touch duration in embodiments of the present disclosure, a user can operate operation objects on a user interface with only one hand. Thus, operations become easier.

The following are embodiments of devices of the present disclosure, which can implement the embodiments of the methods of the present disclosure. The above descriptions regarding the embodiments of the methods also apply to the embodiments of the devices.

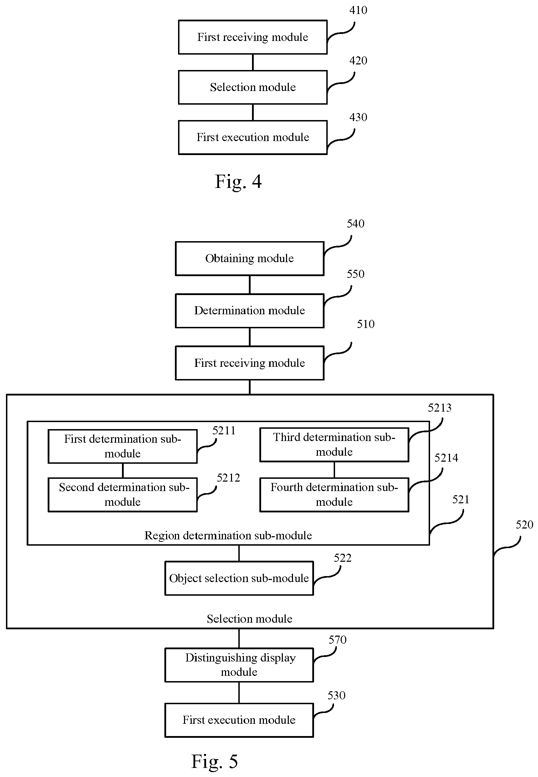

Fig. 4 is a block diagram showing a device for operating an object according to an exemplary embodiment of the present disclosure. The device for operating an object can be realized as whole or a part of a terminal which can provide the method for operating an object by software, hardware or combination thereof. As shown in Fig. 4, the device can include a first receiving module 410, a selection module 420, and a first execution module 430.

The first receiving module 410 is configured to receive an edge touch signal.

The selection module 420 is configured to select a target operation object on a user interface according to the edge touch signal, wherein the edge touch signal is a signal triggered by an edge touch sensor, and the user interface includes at least one operation object.

The first execution module 430 is configured to perform a preset operation on the target operation object.

In view of the above, in the device for operating an object, an edge touch signal is received, a target operation object on a user interface is selected according to the edge touch signal, and a preset operation is performed on the target operation object. In this way, the technical solutions in the present disclosure can solve the problem that it is not convenient for a user to operate a mobile terminal with one hand since the terminal usually has a relatively large screen. By using the technical solutions in the present disclosure, when a user uses a mobile terminal, he/she can operate the terminal with one hand, and thus user experience can be improved.

Fig. 5 is a block diagram showing a device for operating an object according to an exemplary embodiment. The device for operating an object can be realized as whole or a part of a terminal which can provide the method for operating an object by software, hardware or combination thereof. As shown in Fig. 5, the device can include a first receiving module 510, a selection module 520, and a first execution module 530.

The first receiving module 510 is configured to receive an edge touch signal.

The selection module 520 is configured to select a target operation object on a user interface according to the edge touch signal, wherein the edge touch signal is a signal triggered by an edge touch sensor, and the user interface includes at least one operation object.

The first execution module 530 is configured to perform a preset operation on the target operation object.

Optionally, the selection module 520 includes a region determination sub-module 521 and an object selection sub-module 522.

The region determination sub-module 521 is configured to, according to an arrangement of the operation object on the user interface and a signal feature of the edge touch signal, determine a display region on the user interface indicated by the edge touch signal.

The object selection sub-module 522 is configured to select an operation object located in the indicated display region as the target operation object.

Optionally, the edge touch signal is an edge knock signal, and the signal feature includes a knock position and the number of knocks.

The region determination sub-module 521 includes a first determination sub-module 5211 and a second determination sub-module 5212.

The first determination sub-module 5211 is configured to determine a row or a column on the user interface corresponding to the knock position, wherein the at least one operation object on the user interface is arranged in at least one row and column, and each row or column includes a plurality of display regions arranged in order; and

The second determination sub-module 5212 is configured to determine a display region corresponding to the number of knocks in the row or column corresponding to the knock position.

Optionally, the second determination sub-module 5212 is configured to, in the row or column corresponding to the knock position, determine a K-th display region as the display region corresponding to the number of knocks;
wherein K=mod (M, N), M is the number of knocks, and N is the number of the display regions in the row or column corresponding to the knock position.

Optionally, the edge touch signal is a continuous touch signal, and the signal feature includes a touch position and a touch duration.

The region determination sub-module 521 includes a third determination sub-module 5213 and a fourth determination sub-module 5214.

The third determination sub-module 5213 is configured to determine a row or column corresponding to the touch position on the user interface, wherein the at least one operation object on the user interface is arranged in at least one row and column, and each row or column includes a plurality of display regions arranged in order.

The fourth determination sub-module 5214 is configured to, in the row or column corresponding to the touch position, determine an *n-th* display region as the display region corresponding to the touch duration, wherein the touch duration is in direct proportion to *n.*

Optionally, the device can further include an obtaining module 540, a determination module 550 and a second execution module 560.

The obtaining module 540 is configured to obtain a holding gesture of a user by the edge touch sensor.

The determination module 550 is configured to determine whether the holding gesture is a preset holding gesture.

The second execution module 560 is configured to, if the holding gesture is the preset holding gesture, perform the selection of the target operation object on the user interface according to the edge touch signal.

Optionally, the device further includes a distinguishing display module 570.

The distinguishing display module 570 is configured to distinguishingly display the target operation object and other operation objects. The distinguishing displaying can include at least one of displaying the target operation object and other operation objects using different background colors, displaying the target operation object and other operation objects using different border effects, and displaying the target operation object and other operation objects using different text effects.

In view of the above, in the device for operating an object provided by embodiments of the present disclosure, an edge touch signal is received, a target operation object on a user interface is selected according to the edge touch signal, and a preset operation is performed on the target operation object. In this way, the technical solutions in the present disclosure can solve the problem that it is not convenient for a user to operate a mobile terminal with one hand since the terminal usually has a relatively large screen. By using the technical solutions in the present disclosure, when a user uses a mobile terminal, he/she can operate the terminal with one hand, and thus user experience can be improved.

In addition, by obtaining a knock position indicated by the edge touch signal and the number of knocks in embodiments of the present disclosure, a user can operate an operation object on a user interface with only one hand, and thus operations become easier.

In addition, by continuously touching the edge touch sensor and obtaining the touch position indicated by the edge touch signal and the continuous touch duration in embodiments of the present disclosure, a user can operate operation objects on a user interface with only one hand. Thus, operations become easier.

In addition, by distinguishingly displaying the target operation object and other operation objects in embodiments of the present disclosure, when a user wrongly selects an operation object, inadvertent operations can be avoided. In this way, the target operation object is more prominently shown, and inadvertent operations can be avoided. Thus, user experience can be improved.

With respect to the devices in the above embodiments, the specific manners for performing operations for individual modules therein have been described in detail in the embodiments regarding the methods, which will not be elaborated herein.

An exemplary embodiment of the present disclosure provides a device for operating an object, which is capable of implementing the method for operating an object provided by the present disclosure. The device for operating an object can include:
a processor; and
a memory for storing instructions executable by the processor;
wherein the processor is configured to:
receive an edge touch signal;
select a target operation object on a user interface according to the edge touch signal, wherein the edge touch signal is a signal triggered by an edge touch sensor, and the user interface includes at least one operation object; and
perform a preset operation on the target operation object.

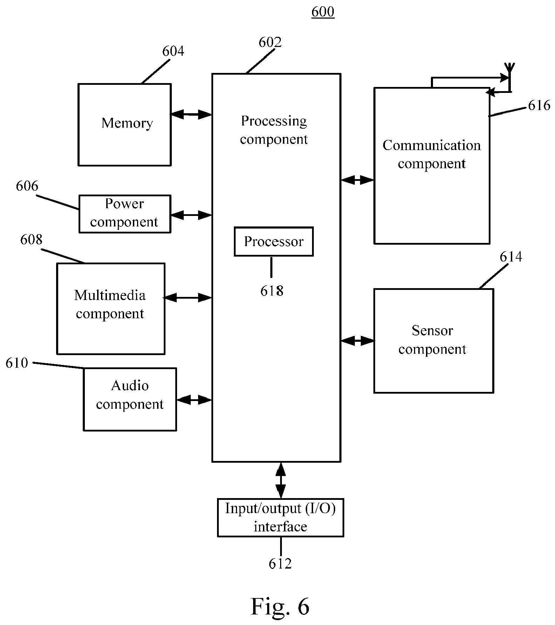

Fig. 6 is a block diagram showing a device for operating an object according to an exemplary embodiment. For example, the terminal 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 618 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods for operating an object.

In an exempalry embodiment, there is also provided a non-volatile computer readable storage medium which includes instructions, for example, the memroy 604 including instructions, and the instructions can be executed by the processor 618 in the device 600 to realize the above methods for operating an object. For examlpe, the non-volatile computer readable storage medium can be an ROM, a read-only memory (ROM), a CD-ROM, a magnetic tape, a soft disk, an optical data storage device and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for operating an object, comprising:
receiving (201, 301) an edge touch signal;
selecting (202) a target operation object on a user interface according to the edge touch signal, wherein the edge touch signal is a signal triggered by an edge touch sensor, and the user interface comprises at least one operation object; and
performing (203) a preset operation on the target operation object.

2. The method according to claim 1, wherein the selecting (202) of the target operation object on the user interface according to the edge touch signal, comprises:
according to an arrangement of the operation object on the user interface and a signal feature of the edge touch signal, determining (304) a display region on the user interface indicated by the edge touch signal; and
selecting (305) an operation object located in the indicated display region as the target operation object.

3. The method according to claim 2, wherein the edge touch signal is an edge knock signal, and the signal feature comprises a knock position and the number of knocks;
wherein the determining (304) of the display region on the user interface indicated by the edge touch signal according to the arrangement of the operation object on the user interface and the signal feature of the edge touch signal, comprises:
determining (3041) a row or a column on the user interface corresponding to the knock position, wherein the at least one operation object on the user interface is arranged in at least one row and column, and each row or column comprises a plurality of display regions arranged in order; and
determining (3042) a display region corresponding to the number of knocks in the row or column corresponding to the knock position.

4. The method according to claim 3, wherein the determining (3042) of the display region corresponding to the number of knocks in the row or column corresponding to the knock position, comprises:
in the row or column corresponding to the knock position, determining a K-th display region as the display region corresponding to the number of knocks;
wherein K=mod (M, N), M is the number of knocks, and N is the number of the display regions in the row or column corresponding to the knock position.

5. The method according to claim 2, wherein the edge touch signal is a continuous touch signal, and the signal feature comprises a touch position and a touch duration;
wherein the determining (304) of the display region on the user interface indicated by the edge touch signal according to the arrangement of the operation object on the user interface and the signal feature of the edge touch signal, comprises:
determining (3043) a row or column corresponding to the touch position on the user interface, wherein the at least one operation object on the user interface is arranged in at least one row and column, and each row or column comprises a plurality of display regions arranged in order; and
in the row or column corresponding to the touch position, determining (3044) an *n-th* display region as the display region corresponding to the touch duration, wherein the touch duration is in direct proportion to *n.*

6. The method according to any one of claims 1 to 5, further comprising:
obtaining (302) a holding gesture of a user by the edge touch sensor;
determining (303) whether the holding gesture is a preset holding gesture; and
if the holding gesture is the preset holding gesture, performing the selection (202) of the target operation object on the user interface according to the edge touch signal.

7. The method according to any one of claims 1 to 6, further comprising:
distinguishingly displaying (306) the target operation object and other operation objects;
wherein the distinguishing displaying comprises at least one of displaying the target operation object and other operation objects using different background colors, displaying the target operation object and other operation objects using different border effects, and displaying the target operation object and other operation objects using different text effects.

8. A device for operating an object, comprising:
a first receiving module (410, 510) configured to receive an edge touch signal;
a selection module (420, 520) configured to select a target operation object on a user interface according to the edge touch signal, wherein the edge touch signal is a signal triggered by an edge touch sensor, and the user interface comprises at least one operation object; and
a first execution module (430, 530) configured to perform a preset operation on the target operation object.

9. The device according to claim 8, wherein the selection module (520) comprises:
a region determination sub-module (521) configured to, according to an arrangement of the operation object on the user interface and a signal feature of the edge touch signal, determine a display region on the user interface indicated by the edge touch signal; and
an object selection sub-module (522) configured to select an operation object located in the indicated display region as the target operation object.

10. The device according to claim 9, wherein the edge touch signal is an edge knock signal, and the signal feature comprises a knock position and the number of knocks; and
wherein the region determination sub-module (521) comprises:
a first determination sub-module (5211) configured to determine a row or a column on the user interface corresponding to the knock position, wherein the at least one operation object on the user interface is arranged in at least one row and column, and each row or column comprises a plurality of display regions arranged in order; and
a second determination sub-module (5212) configured to determine a display region corresponding to the number of knocks in the row or column corresponding to the knock position.

11. The device according to claim 10, wherein the second determination sub-module (5212) is configured to, in the row or column corresponding to the knock position, determine a K-th display region as the display region corresponding to the number of knocks;
wherein K=mod (M, N), M is the number of knocks, and N is the number of the display regions in the row or column corresponding to the knock position.

12. The device according to claim 9, wherein the edge touch signal is a continuous touch signal, and the signal feature comprises a touch position and a touch duration; and
wherein the region determination sub-module (521) comprises:
a third determination sub-module (5213) configured to determine a row or column corresponding to the touch position on the user interface, wherein the at least one operation object on the user interface is arranged in at least one row and column, and each row or column comprises a plurality of display regions arranged in order; and
a fourth determination sub-module (5214) configured to, in the row or column corresponding to the touch position, determine an *n-th* display region as the display region corresponding to the touch duration, wherein the touch duration is in direct proportion to *n.*

13. The device according to any one of claims 8 to 12, further comprising:
an obtaining module (540) configured to obtain a holding gesture of a user by the edge touch sensor;
a determination module (550) configured to determine whether the holding gesture is a preset holding gesture; and
a second execution module (560) configured to, if the holding gesture is the preset holding gesture, perform the selection of the target operation object on the user interface according to the edge touch signal.

14. The device according to any one of claims 8 to 13, further comprising:
a distinguishing display module (570) configured to distinguishingly display the target operation object and other operation objects;
wherein the distinguishing displaying comprises at least one of displaying the target operation object and other operation objects using different background colors, displaying the target operation object and other operation objects using different border effects, and displaying the target operation object and other operation objects using different text effects.

15. A device for operating an object, comprising:
a processor (120); and
a memory (140) for storing instructions executable by the processor (120);
wherein the processor (120) is configured to:
receive an edge touch signal;
select a target operation object on a user interface according to the edge touch signal, wherein the edge touch signal is a signal triggered by an edge touch sensor, and the user interface comprises at least one operation object; and
perform a preset operation on the target operation object.
